# EUROPEAN PATENT APPLICATION

(11) **EP 1 845 062 A1**
(43) Date of publication of application: **17.10.2007**
(21) Application number: 06252070.5
(22) Date of filing: 13.04.2006
(51) Int. Cl.: C01B 3/34, C01B 3/36, C23F 14/02, C23F 15/00

(54) **Process for inhibiting corrosion**

(71) Applicant: BP Chemicals Limited, Sunbury-on-Thames, Middlesex TW16 7BP (GB)
(72) Inventor: Wilson, Peter John, Hull, HU12 8DS (GB); Zhang, Jinzhong, London E14 5NJ (GB)
(74) Representative: Brooke, Caron

(57) **Abstract**

A process for inhibiting corrosion of a metallic surface exposed to an atmosphere and conditions under which metal-carbide formation occurs, which process comprises modifying the composition of the atmosphere with sulphur, characterised in that sulphur is introduced to the atmosphere in the form of elemental sulphur.

## Description

The present invention relates to corrosion inhibition, in particular to a process for inhibiting corrosion in the production of syngas from hydrocarbons.

Mixtures of carbon monoxide and hydrogen, often referred to as syngas, may be produced from hydrocarbons by processes such as steam reforming, autothermal reforming, or partial oxidation, wherein a hydrocarbon feedstock is reacted with water and/or oxygen to form syngas.

Typical partial oxidation processes are described for example in US 2,582,938 and EP-A-0 276 538. In EP-A-0 276 538, a hydrocarbon gas is fed to a partial oxidation reactor in the presence of oxygen and optionally steam, and reacted at elevated temperature and pressure to produce syngas, together with other by-products such as carbon dioxide and carbon soot. The resulting product stream is fed to a waste heat reboiler for recovery of heat generated as a result of the exothermic oxidation reaction, and subsequently to a syngas scrubber, wherein the product stream is contacted with a water spray to remove solid carbonaceous impurities (carbon soot) and other water-soluble impurities from the syngas.

However, a problem associated with such processes is metal dusting corrosion, which can affect the metallic construction materials used in the process, and has been discussed in relation to steam reforming by Hohmann in "Hydrocarbon Processing", March 1996. Metal dusting corrosion is believed to originate from the deposition of a layer of carbon on the metallic surface of the process equipment. Carbon is produced as a byproduct in reforming and partial oxidation processes, and once a carbon layer forms on the metal surface, such as a steel alloy surface, it is able to diffuse below the metal surface and subsequently react to form, inter alia, metal carbide species. Formation of the metal carbide species is reversible, and under certain circumstances results in the creation of small metallic particles, often referred to as a metallic dust.

Although it is possible to protect the surfaces of the process equipment against contact with the gaseous reactants and by-products by lining them with a protective layer, for example by applying a refractory oxide coating, such protective layers generally have, or may develop, cracks or pores that allow the hot gases to penetrate beneath the protective layer, and hence to contact the metallic surface.

Metal dusting corrosion has been reported to be inhibited when sulphur compounds are added to the process. Thus, Udengaard et al, "Oil & Gas Journal", March 1992, pp62-67, reported a decrease in metal dusting corrosion when sulphur, in the form of a vapourised sulphur compound, was added to the syngas recycle stream of a nickel-catalysed steam reforming process. A reduction in the extent of metal dusting corrosion has also been described by Murdoch and Still, "AICHE Ammonia Plant Safety Technical Manual", 1996, V36, 82-93, by the addition of dimethyl disulphide to a steam reformer. Additionally, US 5,720,901 describes the addition of a sulphur-containing compound to a catalysed hydrocarbon partial oxidation process for reducing ammonia and hydrogen cyanide production.

However, the introduction of sulphur-containing compounds can be highly capital intensive and also hazardous due to the often toxic properties of such compounds. Thus, there remains a need for a safe and cost effective method of introducing sulphur into a process in order to mitigate or even eliminate metal dusting corrosion.

According to the present invention, there is provided a process for inhibiting corrosion of a metallic surface exposed to an atmosphere and conditions under which metal-carbide formation occurs, which process comprises modifying the composition of the atmosphere with sulphur, characterised in that sulphur is introduced to the atmosphere in the form of elemental sulphur.

In the present invention, the atmosphere to which the metallic surface is exposed is modified with sulphur which is introduced to the atmosphere in the form of elemental sulphur. Elemental sulphur is advantageous, as it is inexpensive and safe to handle compared to compounds such as organosulphides. Preferably, the elemental sulphur is introduced in the form of a suspension or colloid, which avoids sticking or agglomeration of the solid sulphur particles.

An effective amount of elemental sulphur is introduced to the atmosphere in which metal-carbide formation can occur. The amount of sulphur introduced is sufficiently high to inhibit corrosion of the metal surface, but not so high that the amount of sulphur introduced greatly exceeds that necessary to achieve an acceptable reduction in the rate of corrosion. Too much sulphur could risk contaminating the desired product, or necessitate burdensome product purification procedures to be employed.

Examples of atmospheres in which metal-carbide species can form include atmospheres containing high concentrations of carbon monoxide in combination with low concentrations of oxygen, such as in a process for the production of syngas by steam reforming, autothermal reforming or partial oxidation of hydrocarbons.

In a typical process for the production of syngas, a hydrocarbon feedstock is fed to a reaction zone together with oxygen and/or water at elevated temperature and pressure. The hydrocarbon is preferably a C₁ to C₄ hydrocarbon, and is most preferably methane. The methane may be substantially pure, or may contain small quantities of other hydrocarbons such as ethane, propane and butanes.

The mass ratio of elemental sulphur to hydrocarbon added to the reaction zone is preferably in the range of from 1 : 10⁶ to 30 : 10⁶ (expressed as elemental sulphur), more preferably in the range of from 1 : 10⁶ to 20 : 10⁶.

Although processes for syngas production can be catalysed, in the present invention it is preferable for the reaction to be uncatalysed. This is because the presence of sulphur or sulphur compounds at too high a concentration may adversely affect the lifetime and/or activity of catalysts that are typically suitable for such conversions.

The present invention is particularly beneficial when the source of hydrocarbon to be added to the reaction zone is low in sulphur, for example for unstenched or destenched natural gas supplies, in which sulphur-containing stenching agent has either not been added to the gas supply, or has been removed from the gas supply. Preferably, the hydrocarbon that is fed to the reaction zone has a total sulphur content of less than 10 ppm, more preferably less than 6ppm, expressed as mg elemental sulphur in 1m³ gaseous hydrocarbon at standard temperature and pressure.

The elemental sulphur, after its introduction, may be converted into one or more volatile sulphur-containing compounds, such as H₂S, which can flow throughout different regions or zones of the process. In syngas production processes, for example, the syngas-produced in the reaction zone is removed in a product stream which can then be fed to a waste heat capture zone, wherein heat is extracted from the product stream for use elsewhere. The cooled product stream can then additionally be fed to a purification zone, wherein syngas is extracted from the product stream, and recyclable components are returned to the reactor via a recycle line. Thus, elemental sulphur may be introduced to any zone of the process such that the elemental sulphur, or any sulphur-containing compounds produced therefrom, can contact a metallic surface in the same zone, or in a different zone of the process where corrosion inhibition is required. Thus, to reduce corrosion in a metallic surface in the waste heat capture zone for example, elemental sulphur can be fed either directly into the waste heat capture zone itself, or alternatively it can be fed into the reaction zone or into a recycle line to the reaction zone, in which the sulphur will subsequently pass into the waste heat capture zone along with the syngas-containing product stream of the reaction zone.

Metallic corrosion or dusting can occur when carbon is deposited on the metallic walls of the process equipment, forming a metal-carbide layer. Such a transformation can be represented by the formation of iron carbide, as shown in Reaction (1) below.

3Fe + C ↔ Fe₃C (1)

Metal carbide formation is a reversible process. One variable that influences the rate of formation or decomposition of metal carbide species is temperature, and metal dusting corrosion tends to be highest within a particular range of temperatures, depending on the metal and the atmosphere and conditions to which it is exposed. Without being bound by any theory, it is believed that above a certain temperature the rate of degradation of metal carbide species is high, and hence a metal carbide layer will not exist long enough for it to penetrate below the metallic surface, resulting in a low rate of corrosion or dusting. Below a certain temperature, corrosion will also be low as the rate of formation of the metal carbide is too slow for significant disruption to the metallic surface to occur. However, at temperatures in-between, a metal carbide layer can be formed, and can exist for long enough to penetrate below the metallic surface. As metal carbide formation is reversible, any sub-surface metal carbide species reverting back to elemental metal will begin to cause disruption to the metallic surface, which therefore makes it prone to flaking and dusting.

The presence of sulphur is believed to reduce the effects of metal corrosion or metal dusting by forming metal sulphide species at the metallic surface. Such metal sulphide species are thought to inhibit the formation of iron carbide layers on the metal surface, which reduces the extent of metal corrosion or dusting.

In a preferred embodiment of the present invention, the process is used for inhibiting corrosion in the production of syngas by partial oxidation of a hydrocarbon, which process comprises feeding a hydrocarbon and an oxygen-containing gas to a reaction zone, and removing from the reaction zone a product stream comprising syngas.

In a partial oxidation process, three of the main reactions that occur are as follows.

H₂(CH₂)ₙ + ⁿ/₂O₂ → nCO + (n+1)H₂ (2)

CO+H₂ → C+H₂O (3)

2CO → CO₂+C (4)

Reaction (2) represents the formation of syngas from an alkane and oxygen. Reaction (3) represents the formation of carbon from the reaction of carbon monoxide with hydrogen, and Reaction (4) illustrates an alternative route to carbon formation from the disproportionation of carbon monoxide. Syngas comprises carbon monoxide and hydrogen. The ratio of hydrogen to carbon monoxide in the syngas is dependent on several factors, one of which is the nature of the hydrocarbon. Thus, from Reaction (2), the ratio of hydrogen (H₂) to carbon monoxide (CO) reduces as the number of carbons (n) in the hydrocarbon increases. Other factors that may influence the H₂:CO ratio are the concentration of oxygen, which could cause an increase in the conversion of CO to CO₂ and/or H₂ to H₂O, and the temperature and pressure of the process, which may affect the rate of CO disproportionation to CO₂ and C, for example.

In a typical, uncatalysed process, the hydrocarbon and an oxygen-containing gas are fed to a reaction zone operating at a temperature in the range of from 900°C to 1700°C, and a pressure in the range of from 1 to 250 bara, such as in the range of from 15 to 100 bara. A product stream comprising syngas together with by-products such as carbon dioxide and particles of carbonaceous residue is removed from the reaction zone and preferably fed to one or more further processing stages in order to separate impurities and by-products from the syngas.

Preferably, the product stream from the reaction zone is fed to a waste heat reboiler, wherein heat is extracted from the product stream and used, for example, to heat a supply of pressurised steam for use either within the same process, or within a different process. The cooled product stream is then optionally, and preferably, fed to a scrubbing column, wherein solid carbonaceous residue resulting from the partial oxidation reaction is removed. This can be achieved, for example by feeding water to the scrubbing column to produce an aqueous carbonaceous slurry, which is removed from the base of the scrubbing column, while syngas is recovered from the remaining portion of the gaseous product stream.

The oxygen-containing gas may be air, or a gas richer or poorer in oxygen than air. Although impurities in the oxygen-containing gas, such as nitrogen, are tolerated in the process of the present invention, the concentration of oxygen in the oxygen-containing gas fed to the reaction zone is preferably greater than 50% by volume, more preferably greater than 90% by volume, and even more preferably greater than 95% by volume.

The aqueous carbonaceous slurry removed from the base of the scrubbing column is preferably recycled to the reaction zone so that the carbonaceous residue may be converted into further syngas. This may optionally, and preferably, be achieved by first feeding the slurry to a storage vessel before being fed to the reaction zone via a recycle line. Having a storage vessel helps to maintain an even and controllable flow of aqueous carbonaceous slurry to the reaction zone, by damping any non-even flow effects that may be experienced when carbonaceous slurry is removed from the base of the scrubbing column.

The sulphur may be added to any part of the process, such that it reaches one or more areas in which corrosion inhibition is required. In a preferred embodiment of the present invention, sulphur is fed to the reaction zone, and even more preferably is fed to the reaction zone together with aqueous carbonaceous slurry. Thus the sulphur is added either to the aqueous carbonaceous slurry storage vessel or to the recycle line that transfers the aqueous carbonaceous slurry to the reaction zone, or more preferably to the recycle line that returns the carbonaceous slurry to the reaction zone. This is advantageous as the apparatus required for adding the sulphur in this way is relatively facile and inexpensive to retrofit to a partial oxidation process having such a recycle line. Sulphur can then be transferred along with the product stream from the reaction zone to the waste heat reboiler and to the scrubbing column.

As water is often a constituent of atmospheres under which metal carbide formation can occur, for example in reforming or partial oxidation reactions in which water is either a reactant or is formed during reaction, then use of an aqueous suspension or colloid is preferred. An aqueous dispersion or colloid of elemental sulphur is also advantageous if the sulphur is to be added to the aqueous carbonaceous slurry. The concentration of the elemental sulphur in the aqueous suspension or colloid is preferably up to 90% by weight, more preferably from 10 to 80% by weight such as from 20 to 60% by weight, and is most preferably in the range of from 30 to 50% by weight. The sulphur particles in the suspension are preferably of a size that ensures they remain evenly dispersed in the water, and do not readily settle, such as particles with a diameter of up to 15 µm, which enables an even flow of elemental sulphur to be achieved. Preferably, the diameter of at least 95% the particles is less than 5 µm.

The reaction zone and waste heat reboiler may be constructed from typical construction materials known in the art, such as carbon steel or steel alloy, for example chromium and/or molybdenum-containing steel alloy. They are generally lined with a layer of refractory oxide in order to protect them from the high temperatures experienced during partial oxidation processes.

In the case of iron or iron-containing metals or alloys, metal corrosion or dusting is typically most prevalent at temperatures in the range of from 350 to 1000°C, particularly at temperatures in the range of from 400 to 750°C. Thus, in a partial oxidation process, metal dusting corrosion generally occurs most rapidly in parts of the process where the metallic surface of the process equipment is exposed to temperatures in the range of from 400 to 750°C. Such a temperature range is experienced in the waste heat reboiler, for example, in which the reaction zone product stream fed thereto is cooled from temperatures typically above 900°C to a temperature typically less than 450°C.

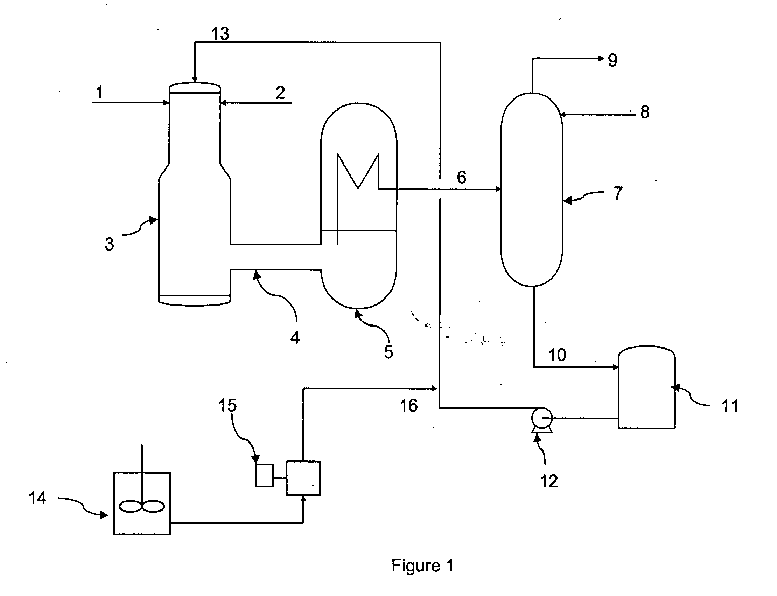

The invention will now be illustrated with reference to Figure 1, which is a schematic representation of a natural gas partial oxidation process in accordance with the present invention.

Oxygen 1 and natural gas 2 are fed to reaction zone 3. The natural gas is free of added sulphur-containing stenching agents, and has a sulphur content of below 6ppm. The product stream 4 is fed from the reaction zone into waste heat reboiler 5, wherein the product stream is cooled from a temperature of above 900°C to a temperature of below 450°C. The cooled product stream 6 is fed to scrubber 7, in which the product stream is contacted with a water spray 8. A syngas-containing stream 9 is removed from the top of the scrubber, while an aqueous carbonaceous slurry 10 is removed from the base of the scrubber and fed to vessel 11, from which it is fed to the reaction zone 3 by means of pump 12 through aqueous carbonaceous slurry recycle line 13. A 40% w/w suspension of elemental sulphur in water, in which 95% of the sulphur particles have a diameter of 5 µm or less, is fed from stirred tank 14 through flow controller 15 into the aqueous carbonaceous slurry recycle line 13, and into the reaction zone 3.

## Claims

1. A process for inhibiting corrosion of a metallic surface exposed to an atmosphere and conditions under which metal-carbide formation occurs, which process comprises modifying the composition of the atmosphere with sulphur, **characterised in that** sulphur is introduced to the atmosphere in the form of elemental sulphur.

2. A process as claimed in claim 1, in which the elemental sulphur is introduced in the form of an aqueous suspension or colloid.

3. A process as claimed in claim 2, in which the concentration of sulphur in the aqueous suspension or colloid is in the range of from 30 to 50% by weight.

4. A process as claimed in any claims 1 to 3, in which the metallic surface is carbon steel or a chromium and/or molybdenum-containing steel alloy.

5. A process as claimed in any one of claims 1 to 4, in which the atmosphere and conditions under which metal-carbide formation occurs results from the production of syngas by partial oxidation of hydrocarbons, autothermal reforming of hydrocarbons, or steam reforming of hydrocarbons, in which a hydrocarbon together with oxygen and/or water are fed to a reaction zone, and a product stream comprising syngas is removed from the reaction zone.

6. A process as claimed in claim 5 in which the production of syngas is by partial oxidation of hydrocarbons in the presence of oxygen and water.

7. A process as claimed in claim 6, in which the product stream comprising syngas is fed to a waste heat reboiler and a scrubbing column.

8. A process as claimed in claim 7, in which an aqueous carbonaceous slurry is removed from the scrubbing column and recycled to the reaction zone.

9. A process as claimed in claim 8, in which the elemental sulphur is fed into the aqueous carbonaceous slurry that is recycled to the reaction zone.

10. A process as claimed in any one of claims 5 to 9, in which the hydrocarbon is a C₁ to C₄ hydrocarbon.

11. A process as claimed in claim 10, in which the hydrocarbon is methane.

12. A process as claimed in any one of claims 5 to 11, in which the total sulphur content of the hydrocarbon is less than 6 ppm by volume, expressed as elemental sulphur, before being fed to the reaction zone.

13. A process as claimed in any one of claims 5 to 12, in which the syngas production process is uncatalysed.
